# EUROPEAN PATENT APPLICATION

(11) **EP 4 207 017 A1**
(43) Date of publication of application: **05.07.2023**
(21) Application number: 21218229.9
(22) Date of filing: 29.12.2021
(51) Int. Cl.: G06Q 10/08

(54) **SYSTEM AND METHOD FOR TRACKING OF ASSETS**

(71) Applicant: Nagravision Sàrl, 1033 Cheseaux-sur-Lausanne (CH)
(72) Inventor: MICHELET, Matthieu, Cheseaux-sur-Lausanne, 1033 (CH); METRAL, Pascal, Cheseaux-sur-Lausanne, 1033 (CH); SHARP, Michael, Cheseaux-sur-Lausanne, 1033 (CH); MARX, Clément, Cheseaux-sur-Lausanne, 1033 (CH); CHINELLI, Adrien, Cheseaux-sur-Lausanne, 1033 (CH); Gee, Jerry, Cheseaux-sur-Lausanne, 1033 (CH)
(74) Representative: Mewburn Ellis LLP

(57) **Abstract**

The present disclosure relates to asset tracking. In particular, the present disclosure relates to facilitating asset supervision and monitoring. Further in particular, the present disclosure relates to a system and method incentivising user behaviour to increase a reliability of the asset tracking. Accordingly, there is provided a method (300) for tracking of at least one asset, comprising the steps receiving (302) ID information (108) of a particular asset, receiving (304) user information of a particular user, receiving (306) location information, wherein the location information is location information of the asset and/or the user, storing (308), in a database, tracking information based on at least one of the received information, associated with the asset, determining (310), based on at least one of the received information, whether to provide ancillary information associated with the asset to the user, determining (312), based on the user information, information to be transmitted to the user, wherein the information to be transmitted is at least a subset of the ancillary information associated with the asset, and providing (314) said information to be transmitted to the user.

## Description

### TECHNICAL FIELD

The present disclosure relates to asset tracking. In particular, the present disclosure relates to facilitating asset supervision and monitoring. Further in particular, the present disclosure relates to a system and method incentivising user behaviour to increase a reliability of the asset tracking.

### BACKGROUND

The present disclosure relates to the tracking of assets. In our globalised world, assets, i.e., products of a specific manufacturer or vendor, are often shipped on a global, worldwide scale. In consequence, a particular asset, on its way from the manufacturing site to the end-user passes through a multitude of locations, possibly accompanied by several changes in ownership. A manufacturer, located in a particular country, may sell assets to a local distributor that in turn sells the product to various national or regional distributors worldwide. They in turn are responsible for reselling and distributing the product to retailers in their region, which in turn sell the asset to the end user or consumer.

It may thus be difficult for the original manufacturer to maintain an overview of the complete retail channel if the asset passes through a plurality of subsequent and separate entities, possibly independent and not directly associated with the manufacturer. Maintaining such an overview however is beneficial for the original equipment manufacturer (OEM) as it allows on the one hand determining where a particular asset is finally sold to the end user on the worldwide market, and on the other hand, by generating a reliable location or travel history of the asset, to assure that the asset is indeed an asset manufactured by the OEM. In other words, maintaining such an overview provides means for counteracting against grey market sale of an asset and/or means for determining whether a particular asset is a counterfeit product not manufactured by the OEM.

Thus, there may be a need for establishing a reliable and verifiable travel history of an asset by tracking the asset through the various stages of transportation from the manufacturer to the end user.

Further, there may be a need to reliably associate ID information with a particular asset.

### SUMMARY

At least one such need may be met by the subject-matter of the independent claims. Preferred embodiments are provided in the dependent claims and are explained in detail in the following description.

The present invention relates to a method and a system for tracking of an asset as well as a computer readable storage medium and a computer program product.

According to a first aspect of the disclosure, there is provided a method for tracking of at least one asset, comprising the steps receiving ID information of a particular asset, receiving user information of a particular user, receiving location information, wherein the location information is location information of the asset and/or the user, storing, in a database, tracking information based on at least one of the received information, associated with the asset, determining, based on at least one of the received information, whether to provide ancillary information associated with the asset to the user, determining, based on the user information, information to be transmitted to the user, wherein the information to be transmitted is at least a subset of the ancillary information associated with the asset, and providing said information to be transmitted to the user.

According to a second aspect of the disclosure, there is provided a system for tracking of at least one asset, the system comprising a communication element, adapted for communication with at least one user of the system, a database for storing information about a particular asset and/or a particular user, and a processing element, adapted to receive ID information of a particular asset, receive user information of a particular user, receive location information, wherein the location information is location information of the asset and/or the user, store, in the database, tracking information based on at least one of the received information, associated with the asset, determine, based on at least one of the received information, whether to provide ancillary information associated with the asset to the user, determine, based on the user information, information to be transmitted to the user, wherein the information to be transmitted is at least a subset of the ancillary information associated with the asset, and provide said information to be transmitted to the user.

According to a third aspect of the disclosure, there is provided a computer-readable storage medium comprising instructions which, when executed by a processing element, cause the processing element to carry out the steps of the method according to the present disclosure.

According to a fourth aspect of the disclosure, there is provided a computer program product comprising instructions which, when executed by a processing element, cause the processing element to carry out the steps of the method according to the present disclosure.

The global economy imposes a large variety of risks for manufacturers of assets both with regard to counterfeit products, thus the imitation of a products by a third-party, and the grey market sale of essentially genuine products through an unofficial trade channel. Both can be subsumed under the term illicit trade.

Counterfeit products are essentially imitations of otherwise authentic products by a third-party with the intent to imitate, steal, destroy or replace the authentic product, for use in illegal transactions or otherwise to deceive customers into believing that the fake product is indeed the original, thereby implying that the counterfeit product is of equal or greater value than the genuine product. Any industry with high value products and/or strongly controlled products is particular susceptible to illicit trade.

Counterfeit products may be any product of sufficient value to the end user, be it depended on price or scarcity/availability, so that counterfeiting efforts are rendered profitable. E.g., fake pharmaceuticals, fake luxury watches, designer clothing and bags, cosmetics, wine, car parts and tobacco products to only name a few are usual targets for counterfeit goods. Grey market sale of goods may in turn be authentic products which are however sold through unauthorised channels that escape appropriate regulation either by the manufacturer themself or the legislator. E.g., luxury goods are sold below brand imposed pricing, prescription drugs are sold without requiring a prescription or more generally the sale of products may occur in a geographical region different from the intended geographical region by the manufacturer or distributor.

Both the sale of counterfeit products and grey market sales may thus lead to significant revenue loss and brand devaluation for the OEM. Further, the sale of non-authentic products may potentially be a risk to consumer safety, which again may reflect negatively on the brand of the OEM in case of an incident.

In light of this, the present disclosure provides for a tracking of assets including monitoring and intelligence that subsequently allows the determination of the origin of a particular asset as well as the determination whether an asset indeed is a genuine asset, produced by the OEM. This determination may be beneficial for various stakeholders, in particular the OEM, the distributors but also the end user or customer.

In order to provide a reliable and in particular untamperable tracking, the present disclosure employs, in particular unique, ID information associated with a particular asset. The ID information is preferably physically attached to the asset or otherwise arranged in its vicinity so to allow an unambiguous correlation between the ID information and the asset. The ID information may in particular comprise an electronic signature or may be otherwise cryptographically secured ID information. In order to reliably determine a location where an asset is currently located, the present disclosure provides the acquisition of the ID information by a user, while the location of the user is known. The ID information, the location information and user information, which may be identification information of a particular user acquiring the ID information may be associated.

Already this set of information allows the checking of the reliability of the information. E.g., in case it is known that a particular user regularly operates at a defined location, a first check may be whether the acquired location corresponds to the usual user location. At the same time, a history of locations and expected future locations or a defined route that a particular asset is expected to travel before initiating shipment allows a plausibility verification whether a particular asset identified by the ID information currently is indeed at a location corresponding to an expected location. In case it is determined that the asset is at a location that is unexpected, an alarm or information may be triggered and sent to the OEM or distributor.

Likewise, it may be determined whether a particular user is expected to acquire the ID information of a particular asset. For example, a user may regularly receive a specific type of asset intended for the region of the user, and this may be verified by the information acquired. When the user suddenly is acquiring ID information of possibly the same type of asset which is however not intended for the specific region of the user, such may trigger an alarm or information which is in turn sent to the OEM or the distributor. E.g., pharmaceuticals, perfumes or the like, which are being acquired while being outside of their intended region may trigger an alarm or an information is sent to the OEM or distributor informing them that potentially a shipment is being redirected, which may indicate the grey market sale of assets.

Further, in case the user is scanning ID information that does not correspond to valid ID information, an alarm or information may be triggered and sent to the OEM or distributor. Also, the user may be informed that the asset that was just scanned may be an asset that is not a genuine product originating from the OEM or distributor and may thus be a counterfeit asset. In this scenario, as soon as a counterfeit asset is introduced into the retail channel, the OEM or distributor learns of this and may thus react by removing such counterfeit assets from the market. Also, the location of first acquisition of counterfeit products may feed into an intelligence analysis, providing information on the geographic region where a fraudulent action may be assumed to have occurred.

Similarly, an end user or consumer may scan the ID information and subsequently may receive information whether the product they are about to purchase or have purchased is a genuine product or possibly counterfeit. In case of a grey market resale of assets, the end user may not necessarily be informed accordingly, as long as the asset is confirmed to still be genuine and the sale is in compliance with all local market regulations.

Once the user acquires ID information of a particular asset, thereby associating a location information with the particular asset, the acquired information may be stored in a database. Such a database may preferably be associated with or accessible by the OEM or distributor. Acquiring a plurality of such datasets allows the continued tracking of the asset through the retail channel.

In order to incentivise the build-up of such a tracking history of a particular asset by repeated scanning of the ID information of that asset by users throughout the retail chain, the present disclosure provides that information related to the particular asset and relevant to the user and/or the location of the asset is provided to the user in response to scanning the particular asset.

For example, a user who is identified as a local retailer may receive authenticity information on the particular asset so to assure that the product is a genuine product. Alternatively, or additionally, the user may receive handling instructions and expiry information on a particular asset. E.g., the user may receive information that the asset needs to be stored at a defined temperature and needs to be sold off until a defined date, as it would otherwise expire. Still further, a user who is identified as an end user or consumer may again receive authenticity information on the particular asset and may receive information regarding the usage of the asset, exemplarily a manual of operation, or prescription information in case the asset is a pharmaceutical.

Essentially, providing this ancillary information, or at least a subset of the stored ancillary information, dependent on the user type, incentivises the acquisition of the asset by the user, and thereby facilitates the build-up of the tracking information.

In a preferred embodiment, location information of both the asset and the user is acquired. The location information may be acquired in the same modality, e.g., both acquired are by using a global positioning system, or using different modalities. This may in particular increase the reliability of the location information. The location information of the asset and the user may be correlated and/or fused so to ascertain or verify the reliability of the location information. This correlation may be done before providing the location information to a further party, i.e., so that already verified location information is provided, which is more reliable, or both sets of location information can be provided, and only later verified and/or stored. An indication may be provided indicating whether the location information is a singly acquired location information, or plurally acquired location information, e.g., of both the asset and the user.

The ID information may be arranged so that it cannot be copied or otherwise duplicated, e.g., photographed, and used or even reused at a later time, e.g., at a different location. E.g., the ID information may comprise a watermark indicator, so to prohibit or at least detect, possibly unauthorized, duplication. The ID information may, e.g., have a marker or information, which cannot be copied and/or reproduced when being photographed.

The relevance of assuring correctness of location information, e.g., the decision whether to obtain and correlate a plurality of independent sets of location information, for example of the asset and the user, may depend on a particular use case or business model. For a certain type of asset, it may be sufficient to only acquire a single location information, while for a further type of asset, the provision of a verified/correlated set of location information, or a plurality of location information may be required, e.g., before providing the information to be transmitted to the user.

According to an embodiment of the present disclosure, the ID information may be acquired by the user from the asset, in particular acquired in the near field at the location of the asset.

In order to assure that the location of the acquired asset corresponds to the user location, measures may be taken to assure that the user can only acquire ID information when actually being at the asset location or in its vicinity. In other words, a remote acquisition of ID information may be prohibited, so to assure that location of the user essentially coincides with the location of the asset. At the same time this assures that only the user close to the asset is able to acquire the ancillary information relevant to the particular user and or the particular location of the asset. In other words, this assures that the location of the asset is verifiably correct and thus is reliable.

E.g., in case the user is associated with a particular trust level, the location information of the asset may share the trust level, if said particular user is acquiring the asset specific ID information.

According to a further embodiment of the present disclosure, the asset may comprise a localised ID information element and the localised ID information element may be associated with the ID information so that the user may acquire the idea information in the near field at the location of the asset, in particular from the localised ID information element.

In other words, by using a localised ID information element, it is assured that the user can acquire the ID information only when being in the near field of the asset, i.e., at all rounds, near or in the vicinity of the asset. In particular, the near field may be such that the ID information may be optically acquired by the user using a dedicated acquisition device. E.g., in case the localised ID information element displays the ID information, the user may acquire the ID information while scanning displayed information on the localised ID information element. Additionally, or alternatively, the localised ID information elements may comprise an electronic component like and electromagnetic transmission that is only a receivable by a suitable acquisition device in the near field. E.g., a near-field Bluetooth connection, NFC communication or the like may allow the acquisition of the ID information in the near field.

A combination of an optical localised ID information element like a barcode, which could potentially be copied by photographing, with electronic means for assuring that the user needs to be in the vicinity of the actual asset like the beforementioned near field communication connection, may be conceivable.

According to a further embodiment of the present disclosure, the ID information may include signature information, in particular the ID information may be cryptographically secured ID information, and the method may further comprise verifying the signature of the ID information and/or the cryptographically secured ID information for determining the validity of the ID information.

By providing a signed or cryptographically secured ID information, a user acquiring the ID information may easily verify the authenticity of the ID information and/or whether the ID information has been tampered with. Further, by such means, a simple duplication of the ID information may be prohibited, so to assure that each ID information, in particular a localised ID information element, is genuine and unique. Likewise, by assuring that a localised ID information element is genuine and unique, allows to assure that the location information acquired by acquisition of the ID information is also genuinely the location information of the asset.

According to a further embodiment of the present disclosure, the user information may comprise at least one of user ID information, user type information and user security level information, and wherein determining whether to provide ancillary information and/or which ancillary information associated with the asset to provide to the user may comprise determining at least one of the validity of the ID information, the validity of the user information, the user ID information, the user type information, the user security level information and the location information.

The ancillary information may comprise a plurality of different sets of information where each set may only be relevant to a specific user or a specific user type. E.g., in case a user is identified as a retailer by either their specific retailer ID or by being identified by the general retailer user type, a subset of information of the ancillary information on the relevant to that specific retailer may be provided to the user. For example, the retailer may receive stocking information or availability information of the type of asset and may thereby adapt the sale activities accordingly. Additionally, or alternatively, the information may comprise handling information, safety information or generally information relevant to a retailer. In case the user is identified as a customer or end user, a different subset or a partially overlapping subset of ancillary information may be provided to the user. E.g., in case of an end user, a product manual, storage information and exploration information may be provided.

Further, only a user with a specific security level may be authorised to receive a specific set of information. Likewise, a user may additionally or alternatively be identified or associated with a specific security level for accessing the ancillary information. E.g., a user with a specific security level may in turn receive access to the previous tracking information. For example, in case the user is a local distributor, the user may receive the previous tracking information from the OEM through the distribution network. In case the user is an end user or consumer, thereby having a different, possibly lower security level, such tracking information may not be available.

User ID information, user type information and/or user security level information may in turn be appropriately secured and validated, e.g., by electronic signatures or other cryptographic methods. Likewise, it is conceivable that only user ID information or user type information is provided when accessing the ancillary information, while the relevant user security level is determined from the user ID information or the user type information, in particular before provisioning the relevant information.

According to a further embodiment of the present disclosure, the tracking information may comprise at least one information out of the group consisting of the asset ID information, the user information, the user type information, the user security level information, the asset location information, the user location information, time information, communication information, network transport information and network routing information.

By providing a plurality of correlated or interdependent information, the reliability of the individual information and thus generally of the reliability of the tracking information may be determined. E.g., in case an asset comprises specific ID information, the user scanning the asset is expected to receive the asset at the scanning location in an expected time period and also the network transport information and routing information transporting the information between the user and the computing back-end correlate, the asset location may be determined with a high level of confidence. Alternatively, in case the specific asset ID information is scanned by a user not expected to scan the ID information but providing apparently correct location information while the network routing information does not match the routing information expected for said particular location, the asset location may be determined only with a low level of confidence. In case the level of confidence is below a certain threshold, a tampering with the tracking may be assumed.

According to a further embodiment of the present disclosure, the database may store/ may be adapted to store the ancillary information associated with the asset.

In other words, the database may store in addition to the tracking information, which may possibly comprise ID information, user information and or location information also the ancillary information associated with a particular asset. Providing a database storing all relevant information associated with a particular asset, may allow the easy provisioning of a centralised database. In addition to the received tracking relevant information and the ancillary information, the database may also store which information of the ancillary information has been provided to a particular user and may log said provisioning. The database may be in the form of a block chain thereby allowing the secure storing of the information in a reliable and in particular untamperable manner that can easily be audited and verified.

According to a further embodiment of the present disclosure, the assets may comprise a localised ID information element attached to the asset and the localised ID information element may be adapted so to be rendered inoperable or to be destroyed in case of a removal from the asset.

The localised ID information element may be arranged so to essentially be destroyed or rendered inactive when being removed from the asset, at least in an unauthorised manner. E.g., in case the localised ID information element is an electronic element that is removed from the asset, by removing the element from the asset an electronic circuit may be destroyed and thereby rendered inoperable. Alternatively, in case of the localised ID information element being a barcode element or the like, i.e., an optical element, the removal of the element may render the visually depicted ID information and readable or incomprehensible. Thereby the removal of the localised ID information element from an asset and reattachment to a different asset is prevented. This avoids e.g., that the localised ID information element of a genuine asset is removed from the asset and attached to a counterfeit asset.

### BRIEF DESCRIPTION OF THE DRAWINGS

The present invention will now be described with reference to the accompanying drawings, in which:
Fig. 1 shows an exemplary embodiment of an asset tracking scenario according to the present disclosure.
Fig. 2 shows an exemplary embodiment of a system for asset tracking according to the present disclosure.
Fig. 3 shows an exemplary embodiment of a method for asset tracking according to the present disclosure.

### DETAILED DESCRIPTION

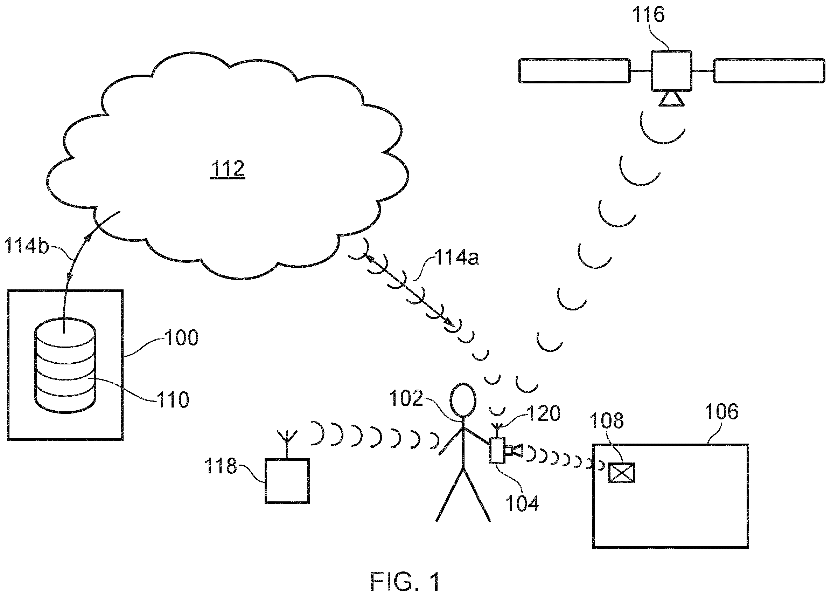

Now referring to Fig. 1, an exemplary embodiment of an asset tracking scenario according to the present disclosure is shown.

Figure 1 shows a scenario for tracking of an asset according to the present disclosure. In this exemplary scenario, a user 102 is in progress of scanning an asset 106. In order to scan the asset, the user 102 is using a tracking device 104. The tracking device 104 is arranged for acquisition of an ID information 108 of the asset 106. ID information 108 may essentially correspond to a localised ID information element 108, which is attached to the asset 106. The localised ID information element 108 may in particular be attached to the asset 106 so that it is destroyed or otherwise rendered inoperable in case it is removed from asset 106. Destroying or otherwise rendering inoperable of the localised ID information element may essentially be understood that the tracking device 104 not being able any more to acquire the localised ID information element 108 and thus the associated ID information 108.

In case of an optical localised ID information element 108, e.g., a barcode like a QR code, the removal may essentially destroy the appearance of the localised ID information element 108 so that the barcode or at least the information conveyed within the barcode is not readable anymore by the tracking device 104. In case of an electronic localised ID information element 108, like an RFID tag or an electronic element comprising near field communication capability like e.g., Bluetooth, the removal of the localised ID information element 108 may render inoperable the electronic device e.g., by breaking the electronic circuit.

The user 102 is thus acquiring the ID information 108 from the localised ID information element 108 using tracking device 104. The tracking device 104 is further arranged to acquire a location, in particular a global location providing a unique reference to the position where the acquisition of the ID information was conducted. Exemplarily, the tracking device 104 may receive position information from a global positioning system like Galileo, GPS or GLONASS. The provision of the global position via a location provisioning system 116 is exemplified by a satellite 116. The satellite 116 may provide signals that allow the determination, possibly together with a plurality of further satellites, of a precise and unique global location by the tracking device 104.

Further methods of position determining are conceivable, e.g., by using a closed-circuit position determining system 118, e.g., a transponder 118, which in turn may provide a localised, near field signal to a tracking device 104. E.g., transponder 118 may provide a secure and unique ID signal to the tracking device 104 so that the tracking device 104 may determine to be in the vicinity of transponder 118. When the tracking device 104 thus acquires the ID information 108 and the transponder signal in close temporal relationship, it can be assured that the acquisition of the ID information 108 of the asset 106 has been performed in the vicinity of the transponder 118. Thus, it is possible to determine a relative location of the acquisition position with regard to the transponder 118. In case the location of the transponder 118 is reliably known, receiving the transponder signal may provide a reliable verification of the position of the acquisition of the ID information 108 of the asset 106 and thus of the location of the asset 106.

Tracking device 104 may be associated with a particular user 102, e.g., by requiring the user to log on to the tracking device 104 with their unique credentials, or the tracking device 100 for itself may exhibit a particular identification or user ID.

In the described scenario, the user 102/the tracking device 104 was thus able to ascertain the ID information 108 of the asset 106 at a defined location in conjunction with a particular user ID or user type associated with the user 102/the tracking device 104. At least part of this information eight sets, preferably the dataset comprising ID information 108, location information and user ID information/user type information, is transmitted to a system 100 for tracking of an asset. The system 100 may be located remotely from the location of the ID information acquisition of the asset 106, exemplified by a communication connection between the tracking device 104 and the system 100 connecting through the cloud 112, e.g., the Internet or a further appropriate communication network.

In order to communicate with the system 100, the tracking device 104 comprises a communication element 120. The tracking device 104 is establishing a communication connection 114a to the cloud 112 while the system 100 in turn establishes itself a communication connection 114b with the cloud 112. It follows that the tracking device 104 and the system 100 are in communicative connection via the cloud 112, e.g., the Internet or a further appropriate communication network.

System 100 comprises, inter alia, a database 110 for storing information relevant to the tracking of the asset. The information may be historical tracking information, location information, asset ID information, user ID information, user type information, user security level information, ID information on the closed-circuit position determining system/transponder and generally ancillary information on a particular asset 106.

When the user 102 provides the tracking information on the asset 106, like asset position, user position, user ID etc., the system 100 may store a subset or all of the received information in its database 110. The database may in particular be a block chain type database that prohibits once written information from being altered subsequently, thereby establishing a reliable ledger of transactions, where the transactions correspond to particular tracking events of an asset. Thereby, an unalterable history of location trackings of assets can be established easily and reliably and in particular audit proof.

After providing the tracking information to the system 100, the user may preferably receive ancillary information associated with the asset 106 and/or the location of the asset 106. E.g., handling information, authenticity information, expiry information or information regarding the future of the asset may be provided to the user 102. E.g., by tracking the asset at a particular location, the system 100 may in turn provide instructions to the user what to do next with the asset 106. Thereby, a route of travel of the asset 106 may be dynamically adapted while the asset is in transit. Such a dynamic rerouting of the asset may further enhance the reliability of the transportation is only the current user has knowledge about the next/future destination of the asset 106. This results in a reduced sphere of knowledge about the travel path of the asset 106, possibly increasing reliability of transport. It is further conceivable that information required for the actual use of the asset is provided by the system 100 to the user 100 to only after establishing a location of the asset 106 and whether said location is valid, reliable and corresponds to the intended location of the asset 106 at a particular point in time. E.g., a code may be transmitted to the user 102 which is required to access the asset 106, or a container where the asset 106 is stored in.

By providing the ancillary information in response to a tracking of the asset 106 and in particular after verification by the system 100 of the correctness of the information from the user 102, the user 102 is incentivised to actually track the asset 106, e.g., by using tracking device 104, and communicating the tracking information to the system 100.

The tracking device 104 may be a dedicated tracking device or alternatively may e.g., be a portable computing device, like a smart phone, which may run a dedicated tracking application.

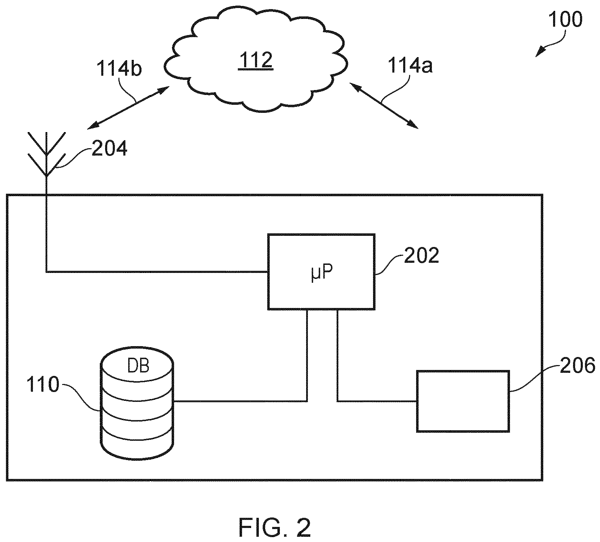

Now referring to Fig. 2, an exemplary embodiment of a system for asset tracking according to the present disclosure is shown.

In figure 2, the system 100 is shown in further detail. The system 100 comprises a processing element 202 microprocessor which is connected to a communication element 204. The communication element 204 is exemplarily depicted as an antenna. Further elements potentially required to operate the antenna 204 like power circuitry or encoding/decoding circuitry for wireless transmission are not specifically depicted in figure 2. Communication element 204 exemplarily is connected to processing element 202 internally of system 100 and operates a communication connection 114b externally of system 100. Communication connection 114b allows the communication of the system 100, in particular of the processing element 202, with remote devices through communication connection 114b.

In figure 2, communication connection 114b is shown as collecting to cloud 112, e.g., the Internet or a further suitable communication network. A further communication connection 114a, e.g., to a tracking device 104 like was depicted in figure 1 is indicated in figure 2. System 100/processing element 200 to adapted to communicate with remote devices wirelessly. Further attached to processing element 200 to a database 110, possibly stored on an appropriate storage medium like a memory module, and HDD were STD or the like. Further, a dedicated memory element 206 is exemplarily connected to processing element 202. Memory element 206 may comprise instructions, i.e., a program, for operating the system 100. In other words, memory element 206 may comprise instructions which, when executed by processing element 202 cause the processing element 202 to carry out the steps of a method 300 for tracking of an asset.

System 100 may thus receive information from a remote device like tracking device 104 of figure 1. The received information may comprise, inter alia, at least one information of a location of an asset and/or a user, ID information of a particular asset and information on the user. User information may be at least one of a user ID, a user type and a user security level. Upon receiving information, the system may access database 110 for verification of the information. E.g., the validity of a particular asset ID information may be verified by accessing database 110. Upon verification of the asset ID information, the system may retrieve ancillary information from the database 110, in particular ancillary information associated with a user ID/user type/user security level and provide said information to the user via communication connection 114b and 114a. Additionally or alternatively, system 100 may verify further received information before sending the ancillary information to the user. E.g., the system 100 may perform a plausibility verification of a provided asset location, thereby determining whether the asset 106 is still on its correct path of travel on the retail channel. Still further additionally or alternatively, the system may store at least a part of the received information in database 110, thereby creating a history of asset trackings of a particular asset. To reliably store the tracking information, the database 110 may in particular be embodied using block chain technology.

Dependent on a specific tracking event, the system 100 may feed back information to the user 102 word to further relevant stakeholders of the transport channel. E.g., the OEM or additional distribution entities may be informed of a particular tracking event, either as a matter of course or because an abnormal tracking event is detected. E.g., in case a particular asset 106 is determined to be at a location which is irregular, a local distributor may be informed about that tracking event. In the case of grey market products, it is conceivable that once an asset is determined to be at a location not corresponding to the intended retail channel, both the original distributor as well as the local distributor are informed so to enable appropriate counteraction, e.g., alerting the relevant authorities, or at least documenting said tracking incident.

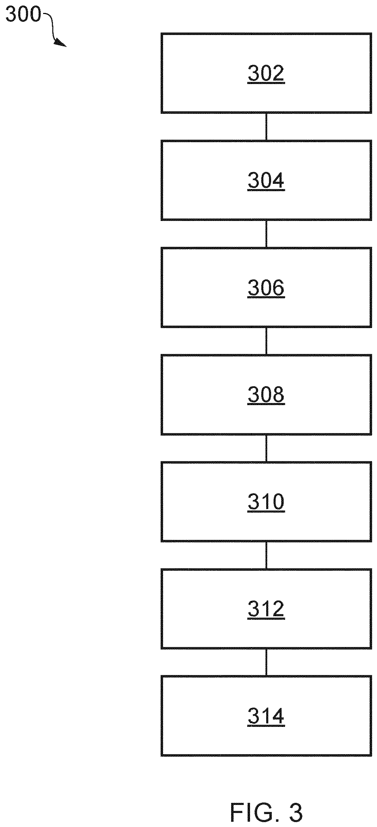

Now referring to Fig. 3, an exemplary embodiment of a method for asset tracking according to the present disclosure is shown.

The method 300 for tracking of at least one asset, comprises the steps of receiving 302 ID information of a particular asset, receiving 304 user information of a particular user, receiving 306 location information, wherein the location information is location information of the asset and/or the user, storing 308, in a database, tracking information based on at least one of the received information, associated with the asset, determining 310, based on at least one of the received information, whether to provide ancillary information associated with the asset to the user, determining 312, based on the user information, information to be transmitted to the user, wherein the information to be transmitted is at least a subset of the ancillary information associated with the asset, and providing 314 said information to be transmitted to the user.

Briefly summarizing and using different terminology, the present disclosure provides a technical solution to use a dedicated platform as an asset tracking engine and for collecting the location of the assets/transported goods. Each stakeholder/user having the goods at some stage will connect to the platform/system for transmitting the location of the goods. In return the system may provide information about the goods depending on the type of the stakeholder.

The object to be tracked is identified by an ID solution such as a QR code, Cryptoglyph or RFID. The ID is inserted at the manufacturing step, associated with the goods and loaded into the platform database. The object usually travels from the manufacturer to various distributors before arriving at the final client. At each station during the route, the holder of the object is able to read the ID and connect with the platform to upload the position of the object. In return the platform can download additional information about the object such as the conservation requirements, the expiration date of the object, composition of the object, etc.

The need for additional information is not the same for a distributor than for a client. The distributor is e.g., interested in the storage requirements, the expiration date and potential risk associated with the product. The final client is interested in the user manual, the limitation or combination to be avoid (e.g., for pharmaceuticals).

The platform may thus provide to each stakeholder the type of information needed in return to the location of the object. The platform can also generate a report showing the route of an object and detect abnormal situations, e.g., by using artificial intelligence or applying a machine learning algorithm.

A tracking platform for tracking objects, said object carrying an identification number having a signature, said platform being connected with a database comprising for each identification number, at least two set of data, each set of data being associated with a security level, said platform being configured to receive from a user a request comprising an identification number of an object, a user security level, a location of said user, verify the signature of the first identification number and in case the signature is not correct, send a notification to the first user. In case the signature is correct, verify the security level of the user and select the set of data associated with said security level, send all or part of the set of data to the user, and record the location of the user in association with the identification number.

It is to be understood that the invention is not limited to the embodiments described above, and various modifications and improvements may be made without deviating from the concepts described here. Any of the features described above and below may be used separately or in combination with any other features described herein, provided they are not mutually exclusive, and the disclosure extends to and includes all combinations and sub-combinations of one or more features described herein.

Finally, it should be noted that the term *"comprising"* not exclude other elements or steps, and that "a" or "one" does not exclude the plural. Elements that are described in relation to different types of embodiments can be combined. Reference signs in the claims shall not be construed as limiting the scope of a claim.

### LIST OF REFERENCE NUMERALS

- 100: system for tracking of an asset
- 102: user
- 104: tracking device
- 106: asset
- 108: ID information/localized ID information element
- 110: database
- 112: cloud
- 114,a,b: communication connection
- 116: location provisioning system/satellite
- 118: closed circuit position determining system/transponder
- 120: communication element

- 202: processing element/µP
- 204: communication element/antenna
- 206: memory element

- 300: method for tracking of an asset
- 302: receiving ID information
- 304: receiving user information
- 306: receiving location information
- 308: storing tracking information
- 310: determining to provide ancillary information
- 312: determining information to the user
- 314: providing information to the user

## Claims

1. A method (300) for tracking of at least one asset, comprising the steps
- Receiving (302) ID information (108) of a particular asset,
- receiving (304) user information of a particular user,
- receiving (306) location information, wherein the location information is location information of the asset and/or the user,
- storing (308), in a database, tracking information based on at least one of the received information, associated with the asset,
- determining (310), based on at least one of the received information, whether to provide ancillary information associated with the asset to the user,
- determining (312), based on the user information, information to be transmitted to the user,
wherein the information to be transmitted is at least a subset of the ancillary information associated with the asset, and
- providing (314) said information to be transmitted to the user.

2. The method according to the preceding claim,
wherein the ID information (108) is acquired by the user (102) from the asset (106), in particular acquired in the near field at the location of the asset.

3. The method according to at least one of the preceding claims,
wherein the asset comprises a localized ID information element (108), and
wherein the localized ID information element is associated with the ID information so that the user can acquire the ID information in the near field at the location of the asset.

4. The method according to at least one of the preceding claims,
wherein the ID information includes signature information, in particular wherein the ID information is cryptographically secured ID information,
the method further comprising
- verifying the signature of the ID information and/or the cryptographically secured ID information for determining the validity of the ID information.

5. The method according to at least one of the preceding claims,
wherein user information comprises at least one of user ID information, user type information and user security level information, and
wherein determining whether to provide ancillary information and/or which ancillary information associated with the asset to provide to the user comprises determining at least one of the validity of the ID information, the validity of the user information, the user ID information, the user type information, the user security level information and the location information.

6. The method according to at least one of the preceding claims,
wherein the tracking information comprises at least one information out of the group consisting of the asset ID information, the user information, the user type information, the user security level information, the asset location information, the user location information, time information, communication information, network transport information and network routing information.

7. System (100) for tracking of at least one asset, the system comprising
a communication element (204), adapted for communication with at least one user of the system,
a database (110) for storing information about a particular asset (106) and/or a particular user (102), and
a processing element (202), adapted to
- receive ID information (108) of a particular asset,
- receive user information of a particular user,
- receive location information, wherein the location information is location information of the asset and/or the user,
- store, in the database, tracking information based on at least one of the received information, associated with the asset,
- determine, based on at least one of the received information, whether to provide ancillary information associated with the asset to the user,
- determine, based on the user information, information to be transmitted to the user,
wherein the information to be transmitted is at least a subset of the ancillary information associated with the asset, and
- provide said information to be transmitted to the user.

8. The system according to the preceding claim,
wherein the ID information is acquired by the user from the asset, in particular acquired in the near field at the location of the asset.

9. The system according to at least one of the preceding claims,
wherein the asset comprises a localized ID information element (108), and
wherein the localized ID information element is associated with the ID information so that the user can acquire the ID information in the near field at the location of the asset.

10. The system according to at least one of the preceding claims,
wherein the ID information includes signature information, and wherein the processing element is adapted to verify the signature of the ID information for determining the validity of the ID information.

11. The system according to at least one of the preceding claims,
wherein user information comprises at least one of user ID information, user type information and user security level information, and
wherein the processing element, for determining whether to provide ancillary information and/or which ancillary information associated with the asset to the user, is adapted to determine at least one of the validity of the ID information, the validity of the user information, the user ID information, the user type information, the user security level information and the location information.

12. The system according to at least one of the preceding claims,
wherein the tracking information comprises at least one information out of the group consisting of the asset ID information, the user information, the user type information, the user security level information, the asset location information, the user location information, time information, communication information, network transport information and network routing information.

13. The method or system according to at least one of the preceding claims, wherein the database stores/is adapted to store the ancillary information associated with the asset.

14. The method or system according to at least one of the preceding claims,
wherein the asset comprises a localized ID information element (108) attached to the asset, and
wherein the localized ID information element is adapted so to be rendered inoperable or to be destroyed in case of a removal from the asset.

15. A computer-readable storage medium or a computer program product comprising instructions which, when executed by a processing element, cause the processing element to carry out the steps of the method according to at least one of the preceding method claims.
